# EUROPÄISCHE PATENTSCHRIFT

(11) **EP 1 725 150 B1**
(45) Veröffentlichungstag und Bekanntmachung des Hinweises auf die Patenterteilung: **23.01.2008**
(21) Anmeldenummer: 05738117.0
(22) Anmeldetag: 11.03.2005
(51) Int. Cl.: A47J 27/00, A47J 36/02

(54) **BEHÄLTER UND VERFAHREN ZUM HERSTELLEN EINES BEHÄLTERS**
CONTAINER AND METHOD FOR THE PRODUCTION OF A CONTAINER
CONTENANT ET PROCEDE DE FABRICATION ASSOCIE

(30) Priorität: 13.03.2004 DE 102004012367
(43) Veröffentlichungstag der Anmeldung: 29.11.2006
(73) Patentinhaber: BLANCO CS GmbH + Co KG, 75038 Oberderdingen (DE)
(72) Erfinder: WURST, Wolfgang, 72760 Reutlingen (DE); HINTERMAYER, Michael, 76698 Ubstadt-Weiher (DE); NEULINGER, Helmut, 75038 Oberderdingen (DE)
(74) Vertreter: Hoeger, Stellrecht & Partner Patentanwälte
(86) Internationale Anmeldenummer: PCT/EP2005/002611
(87) Internationale Veröffentlichungsnummer: WO 2005/087064

(56) Entgegenhaltungen:
- GB-A- 348 875
- GB-A- 471 328
- GB-A- 641 240
- GB-A- 2 222 935
- US-A1- 2002 148 838

## Beschreibung

Die vorliegende Erfindung betrifft einen Behälter, insbesondere zur Aufnahme von Speisen und/oder zur Aufnahme eines Wärmeübertragungsfluids, der einen Grundkörper mit mindestens einer Seitenwand, die einen Innenraum des Behälters begrenzt, umfasst.

Ein solcher Behälter ist beispielsweise aus der DE 102 10 897 A1 bekannt.

Sogenannte Gastronorm-Behälter der aus der DE 102 10 897 A1 bekannten Art werden häufig in der Gemeinschaftsverpflegung eingesetzt, haben aber aufgrund der geringen Materialstärke der Seitenwände und der Bodenwände nur eine sehr geringe Wärmespeicherkapazität.

Die GB-A-2 222 935 offenbart einen Behälter mit den Merkmalen des Oberbegriffs von Anspruch 1.

Der vorliegenden Erfindung liegt die Aufgabe zugrunde, einen Behälter der eingangs genannten Art zu schaffen, welcher eine erhöhte Wärmespeicherkapazität aufweist.

Diese Aufgabe wird durch einen Behälter nach Anspruch 1 gelöst.

Bei der erfindungsgemäßen Lösung grenzt das Wärmeleitelement unmittelbar an den Innenraum des Behälters an, so dass in dem Innenraum des Behälters aufgenommene Speisen oder ein in dem Innenraum des Behälters aufgenommenes Wärmeübertragungsfluid in direktem Kontakt mit dem Wärmeleitelement stehen und somit direkt von dem Wärmeleitelement Wärme aufnehmen können.

Das Wärmeleitelement weist eine hohe Wärmeleitfähigkeit auf, so daß eine rasche Zufuhr von Wärme von einer externen Wärmequelle zu in dem Behälter aufgenommenen Speisen bzw. zu einem in dem Behälter aufgenommenen Wärmeübertragungsfluid durch das Wärmeleitelement hindurch möglich ist.

Das Wärmeleitelement kann dabei beispielsweise mittels einer externen Heizplatte, mittels einer externen induktiven Heizvorrichtung, mittels einer Gasflamme oder durch Kontakt mit einem externen Wärmeübertragungsmedium, beispielsweise mit erhitztem Wasser, erwärmt werden.

Ferner weist der Behälter mit dem Wärmeleitelement eine höhere Wärmekapazität auf als der Behälter ohne das Wärmeleitelement, so daß die in dem Behälter aufgenommenen Speisen bzw. das in dem Behälter aufgenommene Wärmeübertragungsfluid nach Beendigung der externen Wärmezufuhr länger warm bleiben.

Der erfindungsgemäße Behälter eignet sich besonders zum Garen, Kochen, Braten und/oder Warmhalten von Speisen.

Alternativ oder ergänzend hierzu kann jedoch auch vorgesehen sein, daß in dem erfindungsgemäßen Behälter ein Wärmeübertragungsfluid, beispielsweise Wasser, aufgenommen ist, welches durch das Wärmeleitelement des Behälters in das Wärmeübertragungsfluid eingeleitete Wärme an einen im Innenraum des Behälters angeordneten weiteren Behälter, welcher beispielsweise Speisen enthalten kann, weitergibt.

Wenn der erfindungsgemäße Behälter in einem wärmeisolierten Speisentransportbehälter untergebracht wird, so ist aufgrund der hohen Wärmekapazität des Wärmeleitelements keine zusätzliche Heizung des Speisentransportbehälters erforderlich, falls eine Maximalzeit bis zur vollständigen Speisenausgabe eingehalten wird.

Wenn der erfindungsgemäße Behälter in einem Speisenausgabewagen eingesetzt wird, so ist ebenfalls keine zusätzliche Heizung erforderlich, falls eine Maximalzeit bis zur vollständigen Speisenausgabe eingehalten wird.

Dadurch, daß das Wärmeleitelement in direktem Kontakt mit dem Innenraum des Behälters steht, weist der erfindungsgemäße Behälter einen guten Wärmeübertragungswirkungsgrad auf.

Dadurch unterscheidet sich der erfindungsgemäße Behälter insbesondere von bekannten Kochtöpfen, auf deren Boden ein Wärmeleitelement aufgeschweißt wird, wobei jedoch das aufgeschweißte Wärmeleitelement durch den Boden des Kochtopfs von dem Innenraum des Kochtopfs getrennt ist, so daß die durch das Wärmeleitelement zugeführte Wärme durch zwei Bauteile hindurchgelangen muß, was zu einer deutlich verschlechterten Wärmeübertragung führt.

Außerdem kann sich zwischen dem Boden und dem Wärmeleitelement eines solchen Kochtopfs ein Luftkissen ausbilden, was die Wärmeübertragung weiter verschlechtert. Eine solche Luftkissenbildung ist bei dem erfindungsgemäßen Behälter ausgeschlossen.

Ferner ist eine direkte Beheizung durch Gas oder Kontaktwärme bei dem erfindungsgemäßen Behälter ohne weiteres möglich.

Grundsätzlich könnte vorgesehen sein, daß das Wärmeleitelement durch ein beliebiges Fügeverfahren, beispielsweise durch Verklebung oder Vernietung, an dem Grundkörper festgelegt ist.

Bei einer bevorzugten Ausgestaltung des erfindungsgemäßen Behälters ist jedoch vorgesehen, dass das Wärmeleitelement durch Verschweißung an dem Grundkörper festgelegt ist.

Grundsätzlich könnte dabei vorgesehen sein, dass das Wärmeleitelement mittels mehrerer, voneinander beabstandeter oder miteinander überlappender, Schweißpunkte mit dem Grundkörper verschweißt ist.

Bei einer bevorzugten Ausgestaltung der Erfindung ist jedoch vorgesehen, dass das Wärmeleitelement längs einer im wesentlichen linienförmigen Schweißnaht mit dem Grundkörper verschweißt ist.

Eine besonders gute und haltbare Verbindung zwischen dem Wärmeleitelement und dem Grundkörper wird erzielt, wenn das Wärmeleitelement längs einer ringförmig geschlossenen Schweißnaht mit dem Grundkörper verschweißt ist.

Ferner hat es sich als vorteilhaft erwiesen, wenn die Schweißnaht an der dem Innenraum des Behälters zugewandten Seite des Wärmeleitelements angeordnet ist.

Um einen besonders guten Wärmeübergang von dem Wärmeleitelement auf den Inhalt des Behälters zu ermöglichen, ist es von Vorteil, dass der Grundkörper eine Bodenöffnung aufweist, die durch das Wärmeleitelement überdeckt wird.

Diese Bodenöffnung des Grundkörpers wird durch Heraustrennen eines Teils eines Bodenbereichs aus dem Grundkörper gebildet.

Dieser Teil des Bodenbereichs kann insbesondere durch Laserstrahischneiden, Wasserstrahlschneiden oder Ausstanzen herausgetrennt werden.

Bei einer bevorzugten Ausgestaltung der Erfindung umfaßt der Grundkörper einen einstückig mit der Seitenwand ausgebildeten Bodenbereich.

Dieser Bodenbereich des Grundkörpers ist vorzugsweise zumindest abschnittsweise im wesentlichen horizontal ausgerichtet.

Bei einer bevorzugten Ausgestaltung der Erfindung ist vorgesehen, daß das Wärmeleitelement an dem Bodenbereich des Grundkörpers festgelegt ist.

Der erfindungsgemäße Behälter ist in besonders einfacher Weise herstellbar, wenn der Grundkörper als ein Ziehteil ausgebildet ist.

Ferner hat es sich als günstig erwiesen, wenn der Grundkörper ein metallisches Material, vorzugsweise einen nichtrostenden Stahl, umfaßt.

Das Wärmeleitelement kann grundsätzlich in beliebiger Weise gestaltet sein.

Bei einer bevorzugten Ausgestaltung der Erfindung ist vorgesehen, daß das Wärmeleitelement als eine im wesentlichen plattenförmige Wärmeleitplatte ausgebildet ist.

Um eine hohe Wärmeleitfähigkeit und eine hohe Wärmespeicherkapazität des Wärmeleitelements zu gewährleisten, ist vorzugsweise vorgesehen, daß das Wärmeleitelement mindestens ein metallisches Material umfaßt.

Als besonders günstig hat es sich erwiesen, wenn das Wärmeleitelement mindestens zwei Schichten umfaßt, die aus unterschiedlichen Materialien gebildet sind.

Bei einer bevorzugten Ausgestaltung der Erfindung ist vorgesehen, daß das Wärmeleitelement mindestens drei Schichten umfaßt, von denen mindestens zwei Schichten aus unterschiedlichen Materialien gebildet sind.

Als besonders günstig hat es sicher erwiesen, wenn das Wärmeleitelement zumindest bereichsweise aus Aluminium oder aus einer Aluminiumlegierung gebildet ist.

Ferner hat es sich als günstig erwiesen, wenn das Wärmeleitelement zumindest bereichsweise aus einem nichtrostenden Stahl gebildet ist.

Wenn das Wärmeleitelement eine Schicht aus Aluminium oder einer Aluminiumlegierung und mindestens eine Schicht aus einem anderen metallischen Material umfaßt, so ist die Schicht aus Aluminium oder einer Aluminiumlegierung vorzugsweise dicker ausgebildet als die Schicht aus dem anderen metallischen Material.

Eine besonders innige und haltbare Verbindung zwischen dem Wärmeleitelement und dem Grundkörper wird erzielt, wenn der Bereich des Wärmeleitelements, welcher an dem Grundkörper festgelegt ist, und der Bereich des Grundkörpers, an welchem das Wärmeleitelement festgelegt ist, aus im wesentlichen demselben Material gebildet sind, beispielsweise aus einem nichtrostenden Stahl.

Vorzugsweise ist der Grundkörper des Behälters so ausgebildet, daß er die für Gastronorm-Behälter gemäß der DIN EN 631-1 in der Fassung vom September 1993 vorgeschriebenen Abmessungen aufweist. Ein solcher Gastronorm-Behälter ist besonders vielseitig einsetzbar und kann insbesondere in für Gastronorm-Behälter vorgesehene Speisentransportbehälter und/oder Speisenausgabewagen eingesetzt werden.

Ferner umfasst der Grundkörper des Behälters vorzugsweise einen umlaufenden Auflagerand, mit dem der Behälter an einem Aufnahmebehälter und/oder an einer Haltenut oder Halteleiste, beispielsweise eines Speisentransportbehälters oder eines Speisenausgabewagens, einhängbar ist.

Die vorliegende Erfindung betrifft ferner ein Verfahren zum Herstellen eines Behälters, insbesondere eines Behälters zur Aufnahme von Speisen oder eines Behälters zur Aufnahme eines Wärmeübertragungsfluids.

Der Erfindung liegt die weitere Aufgabe zugrunde, ein Verfahren zum Herstellen eines solchen Behälters zu schaffen, welcher eine erhöhte Wärmespeicherkapazität aufweist.

Diese Aufgabe wird erfindungsgemäß durch ein Verfahren zum Herstellen eines Behälters nach Anspruch 20 gelöst.

Besondere Ausgestaltungen des erfindungsgemäßen Verfahrens sind Gegenstand der Ansprüche 21 bis 27, deren Vorteile bereits vorstehend im Zusammenhang mit den besonderen Ausgestaltungen des erfindungsgemäßen Behälters erläutert worden sind.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine Seitenansicht eines Speisenbehälters mit einem Grundkörper, an dessen Bodenbereich eine Wärmeleitplatte festgelegt ist;
- Fig. 2: eine vergrößerte geschnittene Darstellung des Bereichs I aus Fig. 1;
- Fig. 3: eine Draufsicht von oben auf den Speisenbehälter aus Fig. 1;
- Fig. 4: eine Seitenansicht des durch Tiefziehen hergestellten Grundkörpers des Speisenbehälters aus Fig. 1, bevor die Bodenöffnung aus dem Grundkörper herausgetrennt wird;
- Fig. 5: eine Draufsicht von oben auf den Grundkörper des Speisenbehälters aus Fig. 4, bevor die Bodenöffnung aus dem Grundkörper herausgetrennt worden ist;
- Fig. 6: eine Seitenansicht des Grundkörpers des Speisenbehälters aus Fig. 1, nachdem die Bodenöffnung aus dem Grundkörper herausgetrennt worden ist;
- Fig. 7: eine vergrößerte geschnittene Darstellung des Bereichs II aus Fig. 6;
- Fig. 8: eine Draufsicht von oben auf den Grundkörper des Speisenbehälters aus Fig. 1, nachdem die Bodenöffnung aus dem Grundkörper herausgetrennt worden ist; und
- Fig. 9: eine schematische geschnittene Darstellung, die zeigt, wie der Grundkörper des Speisenbehälters mit der herausgetrennten Bodenöffnung mittels eines Spannelements gegen die Wärmeleitplatte gedrückt wird, bevor die Wärmeleitplatte mit dem Grundkörper verschweißt wird.

Gleiche oder funktional äquivalente Elemente sind in allen Figuren mit denselben Bezugszeichen bezeichnet.

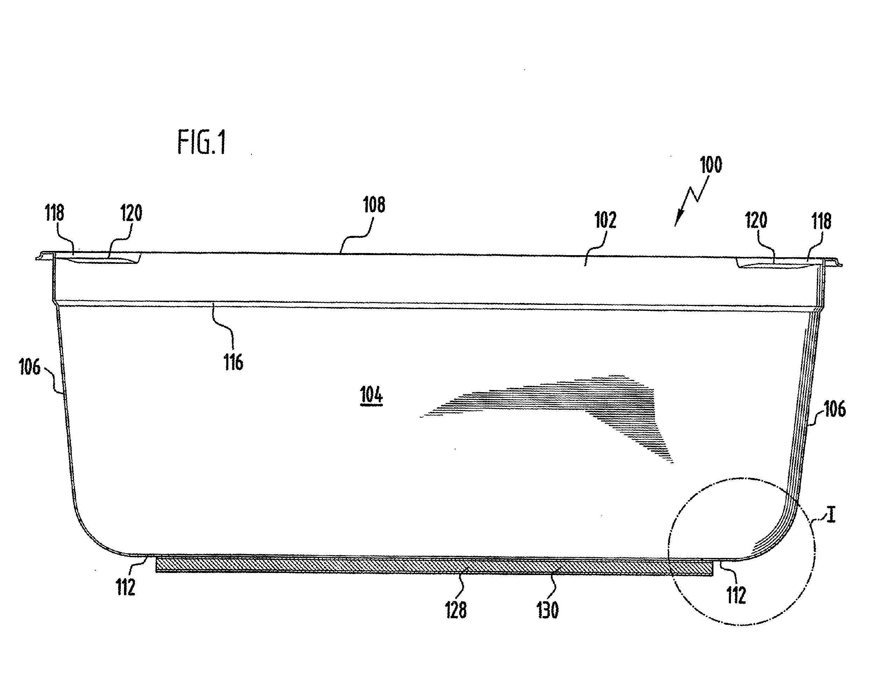

Ein in den Fig. 1 bis 3 dargestellter, als Ganzes mit 100 bezeichneter Speisenbehälter umfaßt einen Grundkörper 102 mit zwei langen Seitenwänden 104, zwei kurzen Seitenwänden 106, einem längs des oberen Randes der Seitenwände 104, 106 umlaufenden Randbereich 108, der längs einer Biegelinie 110 an die Seitenwände 104, 106 angrenzt, und einen im wesentlichen horizontalen Bodenbereich 112, der über einen gekrümmten Bereich 114 des Grundkörpers 102 in die Seitenwände 104 bzw. 106 übergeht.

Im oberen Bereich der Seitenwände 104, 106 ist eine umlaufende Stapelschulter 116 ausgebildet, welche beim Übereinanderstapeln mehrerer Speisenbehälter 100 auf dem Randbereich 108 eines unteren Speisenbehälters 100, in den ein oberer Speisebehälter 100 mit der Stapelschulter 116 eingesetzt ist, aufsitzt.

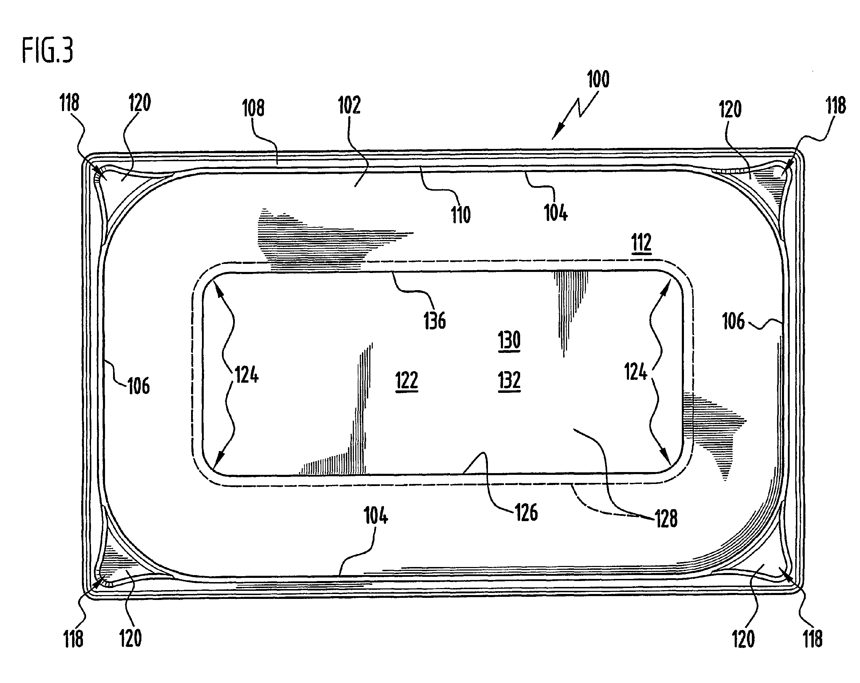

Wie am besten aus Fig. 3 zu ersehen ist, weist der umlaufende Randbereich 108 des Speisenbehälters 100 vier Eckbereiche 118 auf, welche jeweils mit einer Prägung 120 versehen sind, um dem jeweiligen Eckbereich 118 eine hohe Stabilität gegen ein Umknicken oder Verbiegen zu verleihen.

Die genaue Ausbildung dieser Prägungen 120 ist beispielsweise in der DE 102 10 897 A1 beschrieben.

Der Bodenbereich 112 des Grundkörpers 102 umgibt eine im wesentlichen rechteckige Bodenöffnung 122 mit abgerundeten Eckbereichen 124, die dadurch entstanden ist, daß ein Teil des Bodens des Grundkörpers 102 längs des Randes 126 der Bodenöffnung 122 aus dem Grundkörper 102 herausgetrennt worden ist.

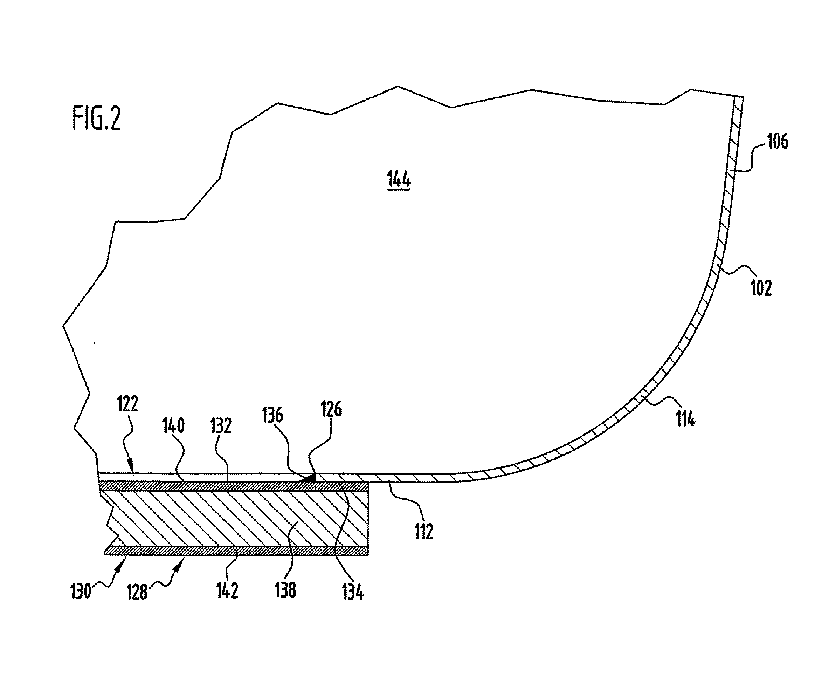

Die Bodenöffnung 122 wird von unten her vollständig durch ein Warmhalteelement oder Wärmeleitelement 128 in Form einer im wesentlichen quaderförmigen Warmhalteplatte oder Wärmeleitplatte 130 überdeckt, deren im wesentlichen ebene Oberseite 132 flächig an der Unterseite 134 des die Bodenöffnung 122 umgebenden Bodenbereichs 112 des Grundkörpers 102 anliegt und durch Verschweißung an einer längs des Randes 126 der Bodenöffnung 122 umlaufenden Schweißnaht 136 (siehe Fig. 2) fest mit dem Grundkörper 102 des Speisenbehälters 100 verbunden ist.

Die Wärmeleitplatte 130 umfaßt eine zentrale Platte 138 aus einem gut wärmeleitenden, metallischen Material, beispielsweise aus Aluminium, die an ihrer Oberseite mit einer ersten Auflage oder Beschichtung 140 aus einem metallischen Material, beispielsweise aus einem nichtrostenden Stahl, insbesondere aus dem Stahl mit der Werkstoffnummer 1.4301, und an ihrer Unterseite mit einer zweiten Auflage oder Beschichtung 142 aus einem metallischen Material, insbesondere aus einem nichtrostenden Stahl, vorzugsweise aus dem Stahl mit der Werkstoffnummer 1.4301, versehen ist.

Bei einer bevorzugten Ausgestaltung der Wärmeleitplatte 130 ist vorgesehen, daß die erste Beschichtung 140 und die zweite Beschichtung 142 aus im wesentlichen demselben Material gebildet sind.

Der für die Beschichtungen 140, 142 vorzugsweise verwendete nichtrostende Chrom-Nickel-Stahl mit der Werkstoffnummer 1.4301 weist die folgende Zusammensetzung auf: 17 bis 19,5 Gewichts-% Cr; 8 bis 10,5 Gewichts-% Ni; höchstens 0,07 Gewichts-% C; höchstens 1,0 Gewichts-% Si; höchstens 2,0 Gewichts-% Mn; höchstens 0,045 Gewichts-% P; höchstens 0,015 Gewichts-% S; höchstens 0,11 Gewichts-% N; Rest Fe.

Die Wärmeleitplatte 130 wird beispielsweise dadurch hergestellt, daß zwei Stahlplatten auf die Oberseite bzw. die Unterseite der zentralen Platte 138 aus Aluminium kalt aufgewalzt werden.

Die Wärmeleitplatte 130 kann auch dadurch hergestellt werden, daß die zentrale Platte 138 aus Aluminium an ihrer Oberseite und an ihrer Unterseite mit jeweils einer Stahlplatte plattiert wird.

Nachdem die zentrale Platte 138 mit den Beschichtungen 140, 142 versehen worden ist, wird die Wärmeleitplatte 130 so zugeschnitten, daß sie im an dem Grundkörper 102 festgelegten Zustand zu allen Seiten um mindestens ungefähr 10 mm über den Rand 126 der Bodenöffnung 122 übersteht.

Die Dicke der zentralen Platte 138 der Wärmeleitplatte 130 beträgt vorzugsweise ungefähr 8 mm.

Die Dicken der ersten Beschichtung 140 und der zweiten Beschichtung 142 betragen vorzugsweise jeweils ungefähr 1 mm.

Die Gesamtdicke der Wärmeleitplatte 130 beträgt vorzugsweise ungefähr 10 mm.

Die Dicke der Seitenwände 104, 106 und des Bodenbereichs 112 des Grundkörpers 102 beträgt vorzugsweise ungefähr 1,25 mm.

Der Grundkörper 102 ist vorzugsweise aus einem metallischen Material, insbesondere aus einem nichtrostenden Stahl, vorzugsweise aus dem Chrom-Nickel-Stahl mit der Werkstoffnummer 1.4301, gebildet.

Bei einer bevorzugten Ausgestaltung des Speisenbehälters 100 ist vorgesehen, daß der Grundkörper 102 im wesentlichen aus demselben Material gebildet ist wie die erste Beschichtung 140 der Wärmeleitplatte 130.

Die Seitenwände 104, 106 des Grundkörpers 102, der Bodenbereich 112 des Grundkörpers 102 und die Oberseite 132 der Wärmeleitplatte 130 begrenzen gemeinsam den Innenraum 144 des Speisenbehälters 100. Insbesondere grenzt die Oberseite 132 der Wärmeleitplatte 130 in dem Bereich der Bodenöffnung 122 direkt an den Innenraum 144 des Speisenbehälters 100 an, so daß in dem Speisenbehälter 100 aufgenommene Speisen in direktem Kontakt mit der Wärmeleitplatte 130 stehen und somit direkt von der Wärmeleitplatte 130 Wärme aufnehmen können.

Das Material der Wärmeleitplatte 130 weist eine hohe Wärmeleitfähigkeit auf, so daß eine rasche Zufuhr von Wärme zu in dem Speisenbehälter 100 aufgenommenen Speisen durch die Wärmeleitplatte 130 hindurch möglich ist, indem die Wärmeleitplatte 130, beispielsweise mittels einer Herdplatte oder einer induktiven Heizvorrichtung oder durch Kontakt mit einem Wärmeübertragungsmedium, beispielsweise mit erhitztem Wasser, erwärmt wird.

Zugleich weist die Wärmeleitplatte 130 aber auch eine deutlich höhere Wärmekapazität auf als der längs des Randes 126 herausgetrennte Bereich des Bodens des Grundkörpers 102, so daß die in dem Speisenbehälter 100 aufgenommenen Speisen länger warm bleiben.

Wenn der Speisenbehälter 100 in einem wärmeisolierten Speisentransportbehälter untergebracht wird, so ist aufgrund der hohen Wärmekapazität der Wärmeleitplatte 130 keine zusätzliche Heizung des Speisentransportbehälters erforderlich, falls eine Maximalzeit bis zur vollständigen Speisenausgabe eingehalten wird.

Wenn der Speisenbehälter 100 in einem Speisenausgabewagen eingesetzt wird, so ist ebenfalls keine zusätzliche Heizung erforderlich, falls eine Maximalzeit bis zur vollständigen Speisenausgabe eingehalten wird.

Der Speisenbehälter 100 eignet sich besonders zum Garen, Kochen, Braten und/oder Warmhalten von Speisen.

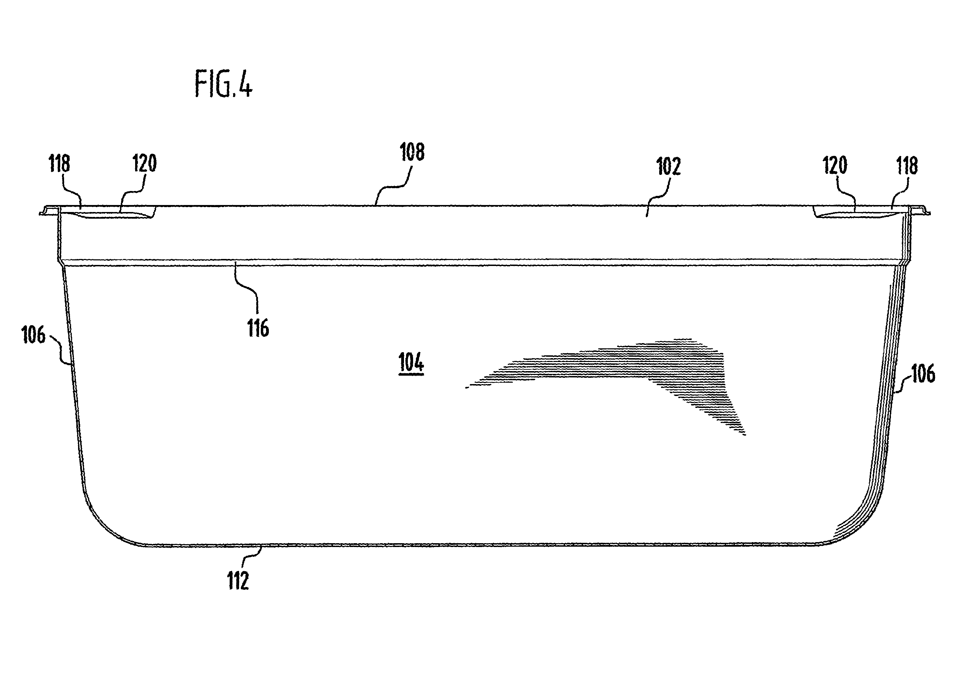

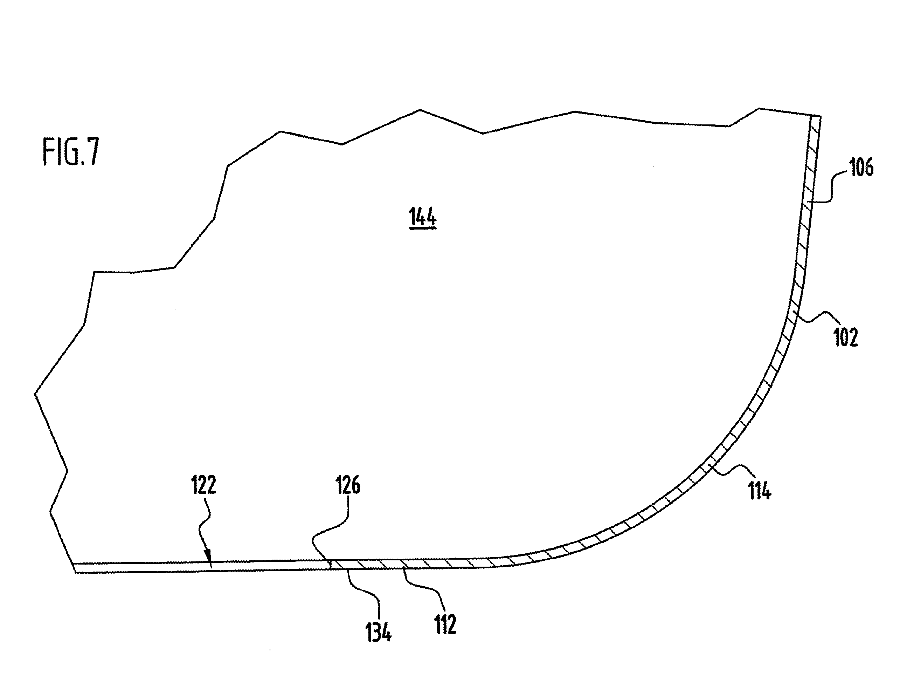

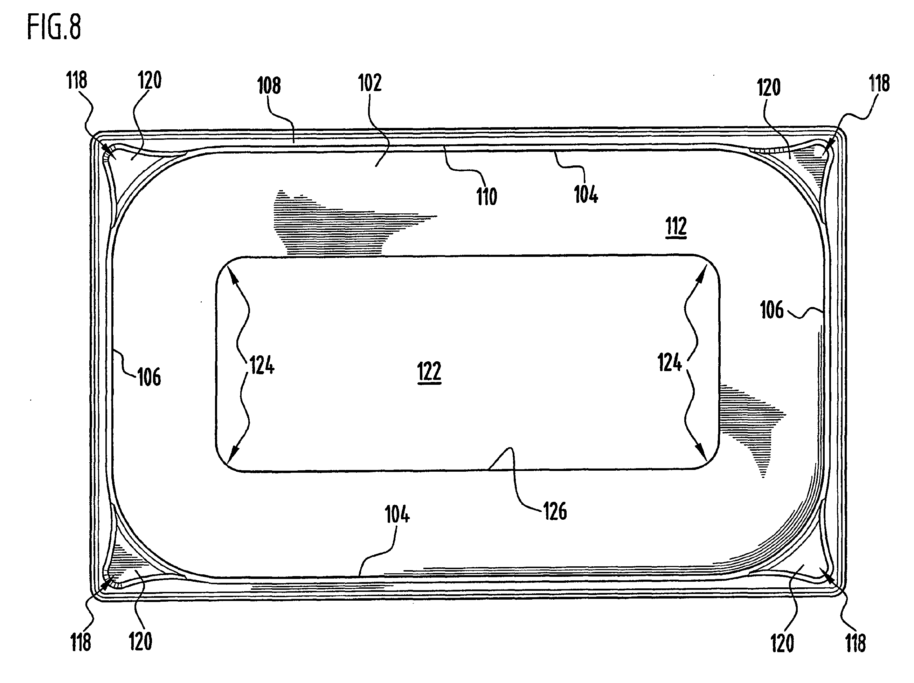

Ein Verfahren zur Herstellung des in den Fig. 1 bis 3 dargestellten Speisenbehälters 100 wird im folgenden unter Bezugnahme auf die Fig. 4 bis 9 beschrieben:

Zunächst wird der Grundkörper 102, vorzugsweise durch einen Tiefziehvorgang, aus einem Blech des metallischen Ausgangsmaterials, beispielsweise aus einem Blech des Stahls mit der Werkstoffnummer 1.4301, geformt.

Die Prägungen 120 in den Eckbereichen 118 des umlaufenden Randbereichs 108 werden mittels eines geeigneten Prägestempels erzeugt.

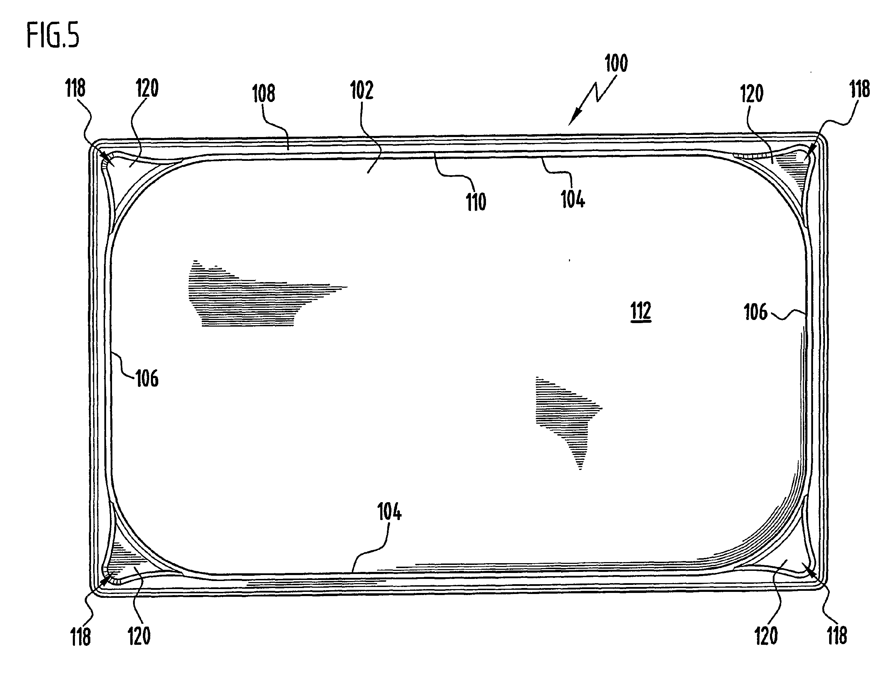

Der auf diese Weise hergestellte Grundkörper 102, der einen vollständig geschlossenen Bodenbereich 112 ohne Bodenöffnung aufweist, ist in den Fig. 4 und 5 dargestellt.

In einem weiteren Arbeitsschritt wird aus diesem Grundkörper 102, beispielsweise mittels eines Laserstrahls, ein Teil des Bodens längs des Randes 126 der

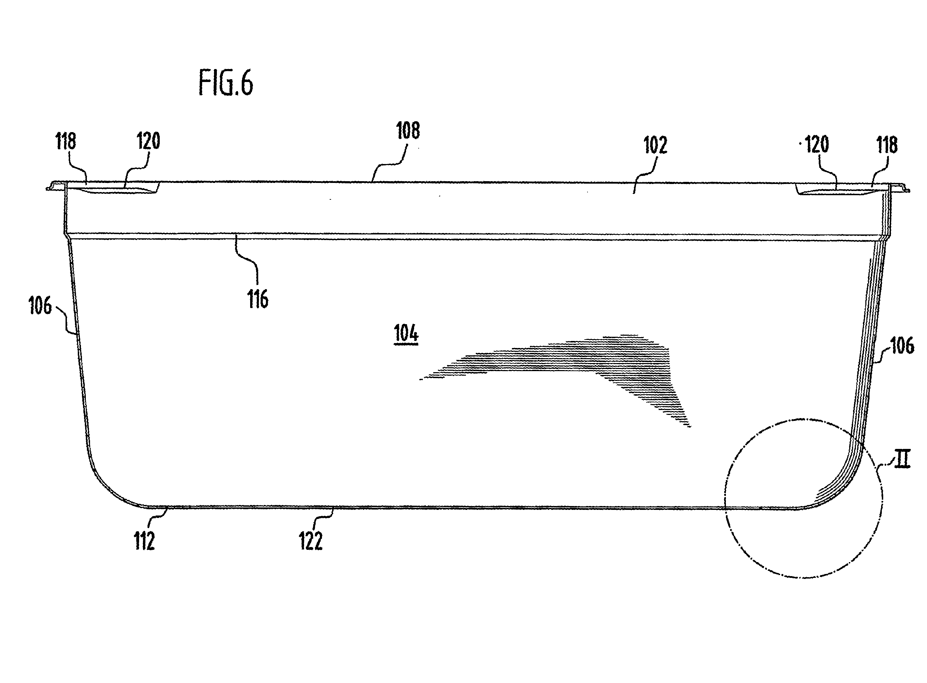

Bodenöffnung 122 herausgetrennt, so daß ein Grundkörper 102 mit einer Bodenöffnung 122 gebildet wird, wie er in den Fig. 6 bis 8 dargestellt ist.

Der Mindestabstand des Rands 126 der Bodenöffnung 122 von dem gekrümmten Bereich 114 des Grundkörpers 102 beträgt dabei vorzugsweise mindestens ungefähr 15 mm.

Anschließend wird die auf das passende Maß zurechtgeschnittene Wärmeleitplatte 130 in eine (nicht dargestellte) Roboter-Einschweißvorrichtung eingelegt.

Der Grundkörper 102 mit der Bodenöffnung 122 wird auf die Wärmeleitplatte 130 aufgelegt und mittels einer Zentriervorrichtung der Roboter-Einschweißvorrichtung vorzentriert.

Anschließend wird der Grundkörper 102 gegen die Wärmeleitplatte 130 gepreßt, und Spannriegel der Roboter-Einschweißvorrichtung werden in den Innenraum 144 des Grundkörpers 102 hineingeklappt und mittels einer Spanneinrichtung gegen die Oberseite 146 des Bodenbereichs 112 des Grundkörpers 102 vorgespannt, und zwar in dem Bereich, in dem die Oberseite 132 der Wärmeleitplatte 130 an der Unterseite 134 des Bodenbereichs 112 anliegt.

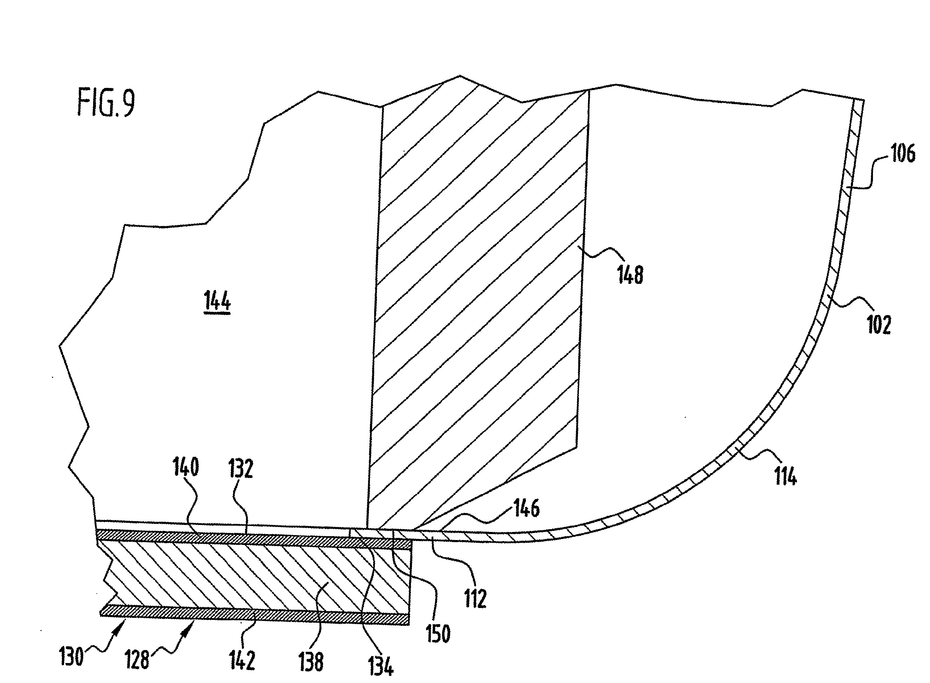

Ein solcher Spannriegel 148, der mit einer Spannfläche 150 flächig an der Oberseite 146 des Bodenbereichs 112 anliegt, ist in Fig. 9 schematisch dargestellt.

Der Spannriegel 148 besteht vorzugsweise aus Kupfer, um beim anschließenden Schweißvorgang entstehende Wärme abführen zu können.

Die Spannriegel 148 dienen dazu, einen Spannungsverzug beim nachfolgenden Einschweißvorgang zu vermeiden.

Anschließend wird die Wärmeleitplatte 130 an ihrer Oberseite 132 längs der Schweißnaht 136, die ihrerseits längs des Randes 126 der Bodenöffnung 122 verläuft, mittels eines Schweißroboters kontinuierlich mit dem Bodenbereich 112 des Grundkörpers 102 verschweißt.

Insbesondere kann vorgesehen sein, daß die Verbindung zwischen der Wärmeleitplatte 130 und dem Grundkörper 102 mittels eines WIG-Roboter-Einschweißverfahrens (Wolfram-Inert-Gas-Roboter-Einschweißverfahren) hergestellt wird.

Nach Abschluß des Schweißvorgangs werden die Spannriegel 148 wieder hochgeklappt, und der durch die Verbindung der Wärmeleitplatte 130 mit dem Grundkörper 102 hergestellte fertige Speisenbehälter 100 kann aus der Roboter-Einschweißvorrichtung entnommen werden.

Um eine vielseitige Verwendbarkeit des Speisenbehälters 100 zu gewährleisten, kann der Speisenbehälter 100 insbesondere als ein Gastronorm-Behälter ausgebildet sein, das heißt die für Gastronorm-Behälter gemäß der DIN EN 631-1 in der Fassung vom September 1993 vorgeschriebenen Abmessungen aufweisen.

## Patentansprüche

1. Behälter, insbesondere zur Aufnahme von Speisen und/oder zur Aufnahme eines Wärmeübertragungsfluids, umfassend einen Grundkörper (102) mit mindestens einer Seitenwand (104, 106), die einen Innenraum (144) des Behälters (100) begrenzt,
wobei der Behälter (100) mindestens ein separat von dem Grundkörper (102) hergestelltes Wärmeleitelement (128) umfasst, das so an dem Grundkörper (102) festgelegt ist, dass das Wärmeleitelement (128) zumindest einen Teil eines den Innenraum (144) des Behälters (100) nach unten begrenzenden Bodens bildet,
wobei der Grundkörper (102) eine Bodenöffnung (122) aufweist, die durch das Wärmeleitelement (128) überdeckt wird,
**dadurch gekennzeichnet,**
**dass** die Bodenöffnung (122) des Grundkörpers (102) durch Heraustrennen eines Teils eines Bodenbereichs (112) aus dem Grundkörper (102) gebildet ist.

2. Behälter nach Anspruch 1, **dadurch gekennzeichnet, dass** das Wärmeleitelement (128) durch Verschweißung an dem Grundkörper (102) festgelegt ist.

3. Behälter nach einem der Ansprüche 1 oder 2, **dadurch gekennzeichnet, dass** das Wärmeleitelement (128) längs einer im wesentlichen linienförmigen Schweißnaht (136) mit dem Grundkörper (102) verschweißt ist.

4. Behälter nach einem der Ansprüche 1 bis 3, **dadurch gekennzeichnet, dass** das Wärmeleitelement (128) längs einer ringförmig geschlossenen Schweißnaht (136) mit dem Grundkörper (102) verschweißt ist.

5. Behälter nach einem der Ansprüche 3 oder 4, **dadurch gekennzeichnet, dass** die Schweißnaht (136) an der dem Innenraum (144) des Behälters (100) zugewandten Seite (132) des Wärmeleitelements (128) angeordnet ist.

6. Behälter nach einem der Ansprüche 1 bis 5, **dadurch gekennzeichnet, dass** der Grundkörper (102) einen einstückig mit der Seitenwand (104, 106) ausgebildeten Bodenbereich (112) umfasst.

7. Behälter nach Anspruch 6, **dadurch gekennzeichnet, dass** der Bodenbereich (112) des Grundkörpers (102) zumindest abschnittsweise im wesentlichen horizontal ausgerichtet ist.

8. Behälter nach einem der Ansprüche 6 oder 7, **dadurch gekennzeichnet, dass** das Wärmeleitelement (128) an dem Bodenbereich (112) des Grundkörpers (102) festgelegt ist.

9. Behälter nach einem der Ansprüche 1 bis 8, **dadurch gekennzeichnet, dass** der Grundkörper (102) als ein Ziehteil ausgebildet ist.

10. Behälter nach einem der Ansprüche 1 bis 9, **dadurch gekennzeichnet, dass** der Grundkörper (102) ein metallisches Material umfasst.

11. Behälter nach einem der Ansprüche 1 bis 10, **dadurch gekennzeichnet, dass** der Grundkörper (102) einen nichtrostenden Stahl umfasst.

12. Behälter nach einem der Ansprüche 1 bis 11, **dadurch gekennzeichnet, dass** das Wärmeleitelement (128) als eine im wesentlichen plattenförmige Wärmeleitplatte (130) ausgebildet ist.

13. Behälter nach einem der Ansprüche 1 bis 12, **dadurch gekennzeichnet, dass** das Wärmeleitelement (128) mindestens ein metallisches Material umfasst.

14. Behälter nach einem der Ansprüche 1 bis 13, **dadurch gekennzeichnet, dass** das Wärmeleitelement (128) mindestens zwei Schichten (138, 140, 142) umfasst, die aus unterschiedlichen Materialien gebildet sind.

15. Behälter nach einem der Ansprüche 1 bis 14, **dadurch gekennzeichnet, dass** das Wärmeleitelement (128) mindestens drei Schichten (138, 140, 142) umfasst, von denen mindestens zwei Schichten (138, 140, 142) aus unterschiedlichen Materialien gebildet sind.

16. Behälter nach einem der Ansprüche 1 bis 15, **dadurch gekennzeichnet, dass** das Wärmeleitelement (128) zumindest bereichsweise aus Aluminium oder aus einer Aluminiumlegierung gebildet ist.

17. Behälter nach einem der Ansprüche 1 bis 16, **dadurch gekennzeichnet, dass** das Wärmeleitelement (128) zumindest bereichsweise aus einem nichtrostenden Stahl gebildet ist.

18. Behälter nach einem der Ansprüche 1 bis 17, **dadurch gekennzeichnet, dass** der Bereich des Wärmeleitelements (128), welcher an dem Grundkörper (102) festgelegt ist, und der Bereich des Grundkörpers (102), an welchem das Wärmeleitelement (128) festgelegt ist, aus im wesentlichen demselben Material gebildet sind.

19. Behälter nach einem der Ansprüche 1 bis 18, **dadurch gekennzeichnet, dass** der Grundkörper (102) so ausgebildet ist, dass er die für Gastronorm-Behälter vorgeschriebenen Abmessungen aufweist.

20. Verfahren zum Herstellen eines Behälters (100), insbesondere eines Behälters zur Aufnahme von Speisen oder eines Behälters zur Aufnahme eines Wärmeübertragungsfluids, umfassend folgende Verfahrensschritte:
- Herstellen eines Grundkörpers (102) mit mindestens einer Seitenwand (104, 106), die einen Innenraum (144) des Grundkörpers (102) begrenzt; und
- Festlegen eines Wärmeleitelements (128) an dem Grundkörper (102) in der Weise, dass das Wärmeleitelement (128) zumindest einen Teil eines den Innenraum (144) des Grundkörpers (102) nach unten begrenzenden Bodens bildet,
**dadurch gekennzeichnet, daß** vor dem Festlegen des Wärmeleitelements (128) an dem Grundkörper (102) an dem Grundkörper (102) eine Bodenöffnung (122) durch Heraustrennen eines Teils eines Bodenbereichs (112) des Grundkörpers (102) aus dem Grundkörper (102) gebildet wird.

21. Verfahren nach Anspruch 20, **dadurch gekennzeichnet, dass** das Wärmeleitelement (128) mit dem Grundkörper (102) verschweißt wird.

22. Verfahren nach einem der Ansprüche 20 oder 21, **dadurch gekennzeichnet, dass** das Wärmeleitelement (128) längs einer im wesentlichen linienförmigen Schweißnaht (136) mit dem Grundkörper (102) verschweißt wird.

23. Verfahren nach einem der Ansprüche 20 bis 22, **dadurch gekennzeichnet, dass** das Wärmeleitelement (128) längs einer ringförmig geschlossenen Schweißnaht (136) mit dem Grundkörper (102) verschweißt wird.

24. Verfahren nach einem der Ansprüche 22 oder 23, **dadurch gekennzeichnet, dass** das Wärmeleitelement (128) an seiner dem Innenraum (144) des Behälters (100) zugewandten Seite (132) mit dem Grundkörper (102) verschweißt wird.

25. Verfahren nach einem der Ansprüche 20 bis 24, **dadurch gekennzeichnet, dass** die Bodenöffnung (122) an dem Grundkörper (102) mittels eines Laserstrahls gebildet wird.

26. Verfahren nach einem der Ansprüche 20 bis 25, **dadurch gekennzeichnet, dass** das Wärmeleitelement (128) an einem im wesentlichen horizontalen Bodenbereich (112) des Grundkörpers (102) festgelegt wird.

27. Verfahren nach einem der Ansprüche 20 bis 26, **dadurch gekennzeichnet, dass** der Grundkörper (102) vor dem Festlegen des Wärmeleitelements (128) an dem Grundkörper (102) durch ein Ziehverfahren, insbesondere durch ein Tiefziehverfahren, gebildet wird.

## Claims

1. Container, in particular for holding food and/or for holding a heat transfer fluid, comprising a base body (102) with at least one side wall (104, 106) which defines an interior space (144) of the container (100),
wherein the container (100) comprises at least one heat conducting element (128) which is produced separately from the base body (102) and is fixed to the base body (102) so that the heat conducting element (128) forms at least a part of a bottom which defines the interior space (144) of the container (100) in the downward direction,
wherein the base body (102) has a bottom opening (122) which is covered by the heat conducting element (128),
**characterised in**
**that** the bottom opening (122) of the base body (102) is formed by separating a part of a bottom region (112) from the base body (102).

2. Container according to Claim 1, **characterised in that** the heat conducting element (128) is fixed to the base body (102) by welding.

3. Container according to any one of Claims 1 and 2, **characterised in that** the heat conducting element (128) is welded to the base body (102) along a substantially linear weld seam (136).

4. Container according to any one of Claims 1 to 3, **characterised in that** the heat conducting element (128) is welded to the base body (102) along a weld seam (136) which is closed in the shape of a ring.

5. Container according to any one of Claims 3 and 4, **characterised in that** the weld seam (136) is disposed on the side (132) of the heat conducting element (128) which faces the interior space (144) of the container (100).

6. Container according to any one of Claims 1 to 5, **characterised in that** the base body (102) comprises a bottom region (112) which is formed in one piece with the side wall (104, 106).

7. Container according to Claim 6, **characterised in that** the bottom region (112) of the base body (102) is oriented substantially horizontally, at least in portions.

8. Container according to any one of Claims 6 and 7, **characterised in that** the heat conducting element (128) is fixed to the bottom region (112) of the base body (102).

9. Container according to any one of Claims 1 to 8, **characterised in that** the base body (102) is formed as a drawn part.

10. Container according to any one of Claims 1 to 9, **characterised in that** the base body (102) comprises a metallic material.

11. Container according to any one of Claims 1 to 10, **characterised in that** the base body (102) comprises a stainless steel.

12. Container according to any one of Claims 1 to 11, **characterised in that** the heat conducting element (128) is formed as a substantially lamellar heat conducting plate (130).

13. Container according to any one of Claims 1 to 12, **characterised in that** the heat conducting element (128) comprises at least one metallic material.

14. Container according to any one of Claims 1 to 13, **characterised in that** the heat conducting element (128) comprises at least two layers (138, 140, 142) which are formed from different materials.

15. Container according to any one of Claims 1 to 14, **characterised in that** the heat conducting element (128) comprises at least three layers (138, 140, 142), of which at least two layers (138, 140, 142) are formed from different materials.

16. Container according to any one of Claims 1 to 15, **characterised in that** the heat conducting element (128) is formed from aluminium or from an aluminium alloy, at least in regions.

17. Container according to any one of Claims 1 to 16, **characterised in that** the heat conducting element (128) is formed from a stainless steel, at least in regions.

18. Container according to any one of Claims 1 to 17, **characterised in that** the region of the heat conducting element (128) which is fixed to the base body (102) and the region of the base body (102) to which the heat conducting element (128) is fixed are formed from substantially the same material.

19. Container according to any one of Claims 1 to 18, **characterised in that** the base body (102) is formed so that it has the dimensions which are prescribed for Gastronorm containers.

20. Method for the production of a container (100), in particular of a container for holding food or a container for holding a heat transfer fluid, comprising the following method steps:
- producing a base body (102) with at least one side wall (104, 106) which defines an interior space (144) of the base body (102); and
- fixing a heat conducting element (128) to the base body (102) so that the heat conducting element (128) forms at least a part of a bottom which defines the interior space (144) of the base body (102) in the downward direction,
**characterised in that**,
prior to fixing the heat conducting element (128) to the base body (102), a bottom opening (122) is formed at the base body (102) by separating a part of a bottom region (112) of the base body (102) from the base body (102).

21. Method according to Claim 20, **characterised in that** the heat conducting element (128) is welded to the base body (102).

22. Method according to any one of Claims 20 and 21, **characterised in that** the heat conducting element (128) is welded to the base body (102) along a substantially linear weld seam (136).

23. Method according to any one of Claims 20 to 22, **characterised in that** the heat conducting element (128) is welded to the base body (102) along a weld seam (136) which is closed in the shape of a ring.

24. Method according to any one of Claims 22 and 23, **characterised in that** the heat conducting element (128) is welded to the base body (102) on its side (132) which faces the interior space (144) of the container (100).

25. Method according to any one of Claims 20 to 24, **characterised in that** the bottom opening (122) is formed at the base body (102 by means of a laser beam.

26. Method according to any one of Claims 20 to 25, **characterised in that** the heat conducting element (128) is fixed to a substantially horizontal bottom region (112) of the base body (102).

27. Method according to any one of Claims 20 to 26, **characterised in that**, prior to fixing the heat conducting element (128) to the base body (102), the base body (102) is formed by a drawing method, in particular by a deep-drawing method.

## Revendications

1. Contenant, destiné en particulier à recevoir des aliments et/ou à recevoir un liquide à transmission thermique, comportant un corps de base (102) avec au moins une paroi latérale (104, 106) qui délimite un espace intérieur (144) du contenant (100),
■ sachant que le contenant (100) comporte au moins un élément thermoconducteur (128), fabriqué séparément du corps de base (102), qui est fixé sur le corps de base (102) de sorte que l'élément thermoconducteur (128) forme au moins une partie d'un fond délimitant vers le bas l'espace intérieur (144) du contenant (100),
■ sachant que le corps de base (102) présente un orifice de fond (122) qui est recouvert par l'élément thermoconducteur (128),
**caractérisé en ce que**, l'orifice de fond (122) du corps de base (102) est réalisé par le fait de retirer une partie d'une zone de fond (112) du corps de base (102).

2. Contenant selon la revendication 1, **caractérisé en ce que** l'élément thermoconducteur (128) est fixé par soudage au corps de base (102).

3. Contenant selon l'une quelconque des revendications 1 ou 2, **caractérisé en ce que** l'élément thermoconducteur (128) est soudé au corps de base (102) le long d'une soudure (136) sensiblement linéaire.

4. Contenant selon l'une quelconque des revendications 1 à 3, **caractérisé en ce que** l'élément thermoconducteur (128) est soudé au corps de base (102) le long d'une soudure (136) fermée en anneau.

5. Contenant selon l'une quelconque des revendications 3 ou 4, **caractérisé en ce que** la soudure (136) est disposée sur le côté (132), de l'élément thermoconducteur (128), tourné vers l'espace intérieur (144) du contenant (100).

6. Contenant selon l'une quelconque des revendications 1 à 5, **caractérisé en ce que** le corps de base (102) comporte une zone de fond (112) réalisée d'un seul tenant avec la paroi latérale (104, 106).

7. Contenant selon la revendication 6, **caractérisé en ce que** la zone de fond (112) du corps de base (102) est orientée sensiblement à l'horizontale, au moins en partie.

8. Contenant selon l'une quelconque des revendications 6 ou 7, **caractérisé en ce que** l'élément thermoconducteur (128) est fixé à la zone de fond (112) du corps de base (102).

9. Contenant selon l'une quelconque des revendications 1 à 8, **caractérisé en ce que** le corps de base (102) est réalisé sous la forme d'une pièce emboutie.

10. Contenant selon l'une quelconque des revendications 1 à 9, **caractérisé en ce que** le corps de base (102) comporte un matériau métallique.

11. Contenant selon l'une quelconque des revendications 1 à 10, **caractérisé en ce que** l'élément de base (102) comporte un acier inoxydable.

12. Contenant selon l'une quelconque des revendications 1 à 11, **caractérisé en ce que** l'élément thermoconducteur (128) est réalisé sous la forme d'une plaque thermoconductrice (130) sensiblement sous forme de plaque.

13. Contenant selon l'une quelconque des revendications 1 à 12, **caractérisé en ce que** l'élément thermoconducteur (128) comporte au moins un matériau métallique.

14. Contenant selon l'une quelconque des revendications 1 à 13, **caractérisé en ce que** l'élément thermoconducteur (128) comporte au moins deux couches (138, 140, 142) qui sont réalisées dans des matériaux différents.

15. Contenant selon l'une quelconque des revendications 1 à 14, **caractérisé en ce que** l'élément thermoconducteur (128) comporte au moins trois couches (138, 140, 142) parmi lesquelles au moins deux couches (138, 140, 142) sont réalisées dans des matériaux différents.

16. Contenant selon l'une quelconque des revendications 1 à 15, **caractérisé en ce que** l'élément thermoconducteur (128) est composé, au moins partiellement, d'aluminium ou d'un alliage d'aluminium.

17. Contenant selon l'une quelconque des revendications 1 à 16, **caractérisé en ce que** l'élément thermoconducteur (128) est composé, au moins partiellement, d'un acier inoxydable.

18. Contenant selon l'une quelconque des revendications 1 à 17, **caractérisé en ce que** la zone de l'élément thermoconducteur (128), laquelle est fixée au corps de base (102), et la zone du corps de base (102), à laquelle est fixé l'élément thermoconducteur (128), sont sensiblement réalisées dans le même matériau.

19. Contenant selon l'une quelconque des revendications 1 à 18, **caractérisé en ce que** le corps de base (102) est réalisé de telle sorte qu'il présente les dimensions réglementaires pour les contenants gastronormes.

20. Procédé de fabrication d'un contenant (100), en particulier d'un contenant destiné à recevoir des aliments ou d'un contenant destiné à recevoir un liquide à transmission thermique, comportant les étapes de procédé suivantes :
■ la fabrication d'un corps de base (102) comportant au moins une paroi latérale (104, 106) qui délimite un espace intérieur (144) du corps de base (102) et
■ la fixation d'un élément thermoconducteur (128) sur le corps de base (102) de telle sorte que l'élément thermoconducteur (128) forme au moins une partie d'un fond délimitant vers le bas l'espace intérieur (144) du corps de base (102),
**caractérisé en ce que**, avant la fixation de l'élément thermoconducteur (128) au corps de base (102), un orifice de fond (122) est réalisé par le fait de retirer, du corps de base (102), une partie d'une zone de fond (112) du corps de base (102).

21. Procédé selon la revendication 20, **caractérisé en ce que** l'élément thermoconducteur (128) est soudé au corps de base (102).

22. Procédé selon l'une quelconque des revendications 20 ou 21, **caractérisé en ce que** l'élément thermoconducteur (128) est soudé au corps de base (102) le long d'une soudure (136) sensiblement linéaire.

23. Procédé selon l'une quelconque des revendications 20 à 22, **caractérisé en ce que** l'élément thermoconducteur (128) est soudé au corps de base (102) le long d'une soudure (136) fermée en anneau.

24. Procédé selon l'une quelconque des revendications 22 ou 23, **caractérisé en ce que** l'élément thermoconducteur (128) est soudé au corps de base (102) sur son côté (132) tourné vers l'espace intérieur (144) du contenant (100).

25. Procédé selon l'une quelconque des revendications 20 à 24, **caractérisé en ce que** l'orifice de fond (122) est réalisé sur le corps de base (102) au moyen d'un rayon laser.

26. Procédé selon l'une quelconque des revendications 20 à 25, **caractérisé en ce que** l'élément thermoconducteur (128) est fixé à une zone de fond (112) sensiblement horizontale du corps de base (102).

27. Procédé selon l'une quelconque des revendications 20 à 26, **caractérisé en ce que** le corps de base (102) est réalisé, avant la fixation de l'élément thermoconducteur (128) au corps de base (102), par un procédé d'emboutissage, notamment par un procédé d'emboutissage profond.
